(19) Europäisches Patentamt / European Patent Office / Office européen des brevets

(11) **EP 2 369 715 B1**

(12) **EUROPÄISCHE PATENTSCHRIFT**

(45) Veröffentlichungstag und Bekanntmachung des Hinweises auf die Patenterteilung:
**21.09.2016  Patentblatt 2016/38**

(51) Int Cl.:
***H02J 9/00*** *(2006.01)*       *H02H 3/12* *(2006.01)*

(21) Anmeldenummer: **10401038.4**

(22) Anmeldetag: **24.03.2010**

(54) **Schaltungsanordnung zum Betreiben eines Haushaltgerätes**

Circuit assembly for operating a household device

Circuit agencement pour le fonctionnement d'un appareil ménager

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**28.09.2011  Patentblatt 2011/39**

(73) Patentinhaber: **Miele & Cie. KG**
**33332 Gütersloh (DE)**

(72) Erfinder:
 • **Zinkann, Peter**
  **33332 Gütersloh (DE)**
 • **Meierfrankenfeld, Wenzel**
  **33334 Gütersloh (DE)**
 • **Kersting, André**
  **59329 Wadersloh (DE)**

(56) Entgegenhaltungen:
WO-A1-95/23450            DE-A1- 19 537 199
DE-A1-102007 058 379     DE-A1-102008 030 464
US-A1- 2003 086 024

**Beschreibung**

Die Erfindung betrifft eine Schaltungsanordnung zum Verbinden oder Trennen von elektrischen Komponenten eines Haushaltgerätes mit/von einem Versorgungsnetz.

Aus dem Stand der Technik ist gemäß der DE 10 2007 058 379 A1 eine Schaltungsanordnung bekannt, bei der das Schaltnetzteil mittels eines elektrischen Schalters mit dem Versorgungsnetz gekoppelt ist. Hierzu ist ferner ein elektrischer Schalter vorgesehen, der von der Steuereinrichtung oder mittels eines Tasters geschaltet werden kann. Die zum Ein- oder Ausschalten benötigte elektrische Energie muss immer bereitstehen, so dass insbesondere in einer sogenannten Standby-Betriebsart zumindest in den Schaltmomenten hohe Ströme auftreten können.

Aus der US 2003/0086024 A1 ist eine Schaltungsanordnung zum Ein- und Ausschalten eines elektrischen Gerätes bekannt, das ferner einen Energiespeicher zur Bereitstellung von Stromimpulsen zum Schalten eines bistabilen Relais, das die Netzleitung mit einem Schaltnetzteil verbindet oder trennt. Die Gleichspannung wird mittels eines Gleichrichters bereitgestellt, der über einen kapazitiven Spannungsteiler stets mit der Netzversorgung verbunden ist. Die Steuereinrichtung ist dann einem sogenannten Längsregler nachgeschaltet, der einen Großteil der zugeführten Energie als Verlustwärme vernichtet, um die konstante niedrige Kleinspannung für die Steuereinrichtung bereitzustellen. Aufgrund dieser Anordnung weist der Standby-Betrieb einen recht hohen Energiebedarf auf.

Der Erfindung liegt somit die Aufgabe zugrunde, eine Schaltungsanordnung bereitzustellen, die einen energiesparenden Stand-by-Betrieb bei einer optimalen Funktionalität ermöglicht.

Erfindungsgemäß wird diese Aufgabe durch eine Schaltungsanordnung mit den Merkmalen des unabhängigen Anspruchs 1 gelöst. Vorteilhafte Ausgestaltungen und Weiterbildungen der Erfindung ergeben sich aus den nachfolgenden abhängigen Ansprüchen.

Der mit der Erfindung erreichte Vorteil besteht darin, dass auch im abgeschalteten Zustand, also wenn das Schaltnetzteil vom Versorgungsnetz getrennt ist, ein Einschalten des Gerätes durch Gerätezustände oder eine Bedienung einer Bedienhandhabe möglich ist, ohne den Strom bzw. die vom Gerät aufgenommene Leistung im Stand-by-Betrieb zu erhöhen. Dadurch kann zuverlässig eine günstige Klassifizierung des Stand-by-Energieverbrauchs erreicht werden. Ferner ist sowohl ein zuverlässiges Abschalten und Wiedereinschalten des Haushaltgerätes möglich.

Gemäß der Erfindung umfasst die Schaltungsanordnung zumindest einen Energiespeicher zum Speichern von elektrischer Energie in Form einer elektrischen Ladung, wobei das Steuerungsmittel dazu eingerichtet ist, aus der gespeicherten elektrischen Energie einen Spannungs- und/oder Stromimpuls für den elektrischen Schalter zu erzeugen, um die Kopplung oder Trennung des Schaltnetzteils zum/vom Versorgungsnetz zu bewirken. Der Energiespeicher ist hierbei Bestandteil eines Kondensatornetzteils, das eine netzgetrennte Kleinspannung bereitstellt, deren Minuspotential auf Schutzleiterpotential liegt. Bei Einsatz von Y-Kondensatoren für das Netzfilter ist eine sichere Trennung gegeben.

In einer vorteilhaften Weiterbildung ist der Energiespeicher als Kondensatornetzteil ausgebildet und an den Versorgungseingängen unabhängig vom Schaltnetzteil gekoppelt, wobei die Kopplung mittels zumindest einer R-C-Schaltung und einem nachgeschaltetem Gleichrichter erfolgt, und wobei dem Gleichrichter ein Kondensator zur Speicherung von elektrischer Ladung nachgeschaltet ist. Ein solches Kondensatornetzteil weist besonders geringe Verluste auf, insbesondere sind die sogenannten Leckströme bzw die daraus resultierende Wirkleistung besonders gering. Die Reihenschaltung aus zumindest einem Kondensator, vorzugsweise zwei Kondensatoren, mit einem Widerstand kann hierbei so ausgelegt sein, dass sie als sichere Trennung ausgebildet ist.

In einer anderen Weiterbildung umfasst die Schaltungsanordnung eine Steuerungseinrichtung, die zum Steuern von Prozessen im Haushaltgerät ausgebildet und dazu eingerichtet ist, den elektrischen Schalter zum Trennen des Schaltnetzteils vom Versorgungsnetz zu schalten. Damit kann eine Abschaltung des Gerätes in Abhängigkeit des Gerätes oder Programmzustandes vorgenommen werden, beispielsweise wenn der Benutzer einen Wäschetrockner mittels der Bedienhandhabe abschaltet, kann die Steuereinrichtung ein kontrolliertes Herunterfahren bewirken, so dass in diesem Fall zuerst das Heizregister abgeschaltet wird, wobei das Gebläse und die Trommelbewegung noch eine gewisse Zeit aktiviert sind, bis der gesamte Prozess abgekühlt ist. Die endgültige Trennung des Schaltnetzteils erfolgt somit zeitverzögert.

In einer vorteilhaften Weiterbildung umfasst das Steuerungsmittel eine programmierbare Echtzeituhr, die dazu eingerichtet ist, den elektrischen Schalter zum Koppeln oder Trennen des Schaltnetzteils zum/vom Versorgungsnetz zu schalten. Die Echtzeituhr ist auch bei getrenntem Schaltnetzteil aktiv, so dass ein Einschalten des Gerätes zu einem programmierten Zeitpunkt bewirkt werden kann. Das bedeutet, dass das Gerät mittels einer Benutzervorgabe zu einem definierten Zeitpunkt ein- oder ausgeschaltet werden kann.

In einer weiteren Ausführung ist das Steuerungsmittel zur Auswertung und Erkennung eines Türkontaktes ausgebildet. Damit kann das Öffnen oder Schließen einer Tür, die mit dem Haushaltgerät in funktionellem Zusammenhang steht, zum Ein- oder Ausschalten des Gerätes bzw. zum Verbinden bzw. zum Trennen des Schaltnetzteils zum/vom Versorgungsnetz verwendet werden.

In einer zweckmäßigen Ausführung ist das Steuerungsmittel zu seiner Energieversorgung zumindest mittelbar an einem Gleichspannungsausgang des Schaltnetzteils angeschlossen, wobei ein weiterer Energiespeicher vorhanden ist, der dazu geeignet ist, das Steuerungsmittel zu versorgen, wenn das Schaltnetzteil vom Versorgungsnetz getrennt ist. Damit ist im eingeschalteten Zustand die zuverlässige Versorgung über das Schaltnetzteil sichergestellt. Im abgeschalteten Zustand erfolgt die Versorgung mit Hilfe des weiteren Energiespeichers, wobei dieser nur für die Bereitstellung eines Teils des gesamten Energiebedarfs ausgebildet ist. Dieser Teil reicht beispielsweise aus, um die Echtzeituhr oder eine Türkontaktauswertung mehrere Wochen zu betreiben.

Zum Laden der Energiespeicher ist eine Vorrangschaltung vorgesehen, die dazu eingerichtet ist, den ersten Energiespeicher vorrangig mit einem begrenzten maximalen Ladestrom zu laden und nach Erreichen eines vorgegebenen Ladungszustandes den weiteren Energiespeicher für die Echtzeituhr mit einem begrenzten Ladestrom zu laden, wenn das Schaltnetzteil vom Versorgungsnetz getrennt ist. Damit ist sichergestellt, dass kein zu hoher Ladestrom, wenn auch nur kurzzeitig, fließt, wenn beide Energiespeicher entladen sind.

Um eine möglichst günstige Klassifizierung des Energieverbrauchs zu erreichen, ist die Schaltungsanordnung so ausgelegt, dass der maximale Ladestrom und die Spannung derart eingestellt sind, dass die Leistungsaufnahme etwa 5 mW oder kleiner als 5 mW beträgt.

Insgesamt ist es zweckmäßig, dass der erste Energiespeicher und der weitere Energiespeicher bei vom Versorgungsnetz getrenntem Schaltnetzteil dazu ausgebildet sind, dass die Ladezeit bis Erreichen des Nennladezustandes im Bereich von 5 bis 14 Sek. liegt, ohne den maximalen Ladestrom zu überschreiten. Damit sind die elektrischen Komponenten, wie Schaltnetzteil, Steuermittel und Steuereinrichtung, bei der Inbetriebnahme des Gerätes, wenn der Stecker in eine Steckdose des Versorgungsnetzes eingesteckt wird, nach dieser recht kurzen Ladezeit betriebsbereit, wobei die maximale Stromaufnahme den maximal zulässigen Stand-by-Strom nicht überschreitet.

In einer weiteren zweckmäßigen Weiterbildung umfasst die Schaltungsanordnung eine Verstärkerschaltung, die bei eingeschaltetem Haushaltgerät, bei dem das Schaltnetzteil mit dem Versorgungsnetz verbunden ist, den weiteren Energiespeicher mit einem höheren Ladestrom laden kann, als bei ausgeschaltetem Haushaltgerät, wobei die Ladezeit entsprechend kürzer ist. Dadurch wird sichergestellt, dass der Energiespeicher für die Echtzeituhr stets und zuverlässig auf den maximalen Ladungszustand gebracht wird, wenn das Gerät zuvor längere Zeit vom Netz getrennt war.

In einer weiteren, zweckmäßigen Ausführung wird die Auswerteschaltung für die Bedienhandhabe von einer eigenen Anlaufschaltung versorgt. Die Anlaufschaltung ist hierbei dazu eingerichtet, die Versorgung der Auswerteschaltung unabhängig vom Schaltzustand des elektrischen Schalters bereitzustellen, wobei die Schaltung ferner dazu ausgebildet ist, bei Unterschreiten eines vorgegebenen unteren Grenzwertes ein steilflankiges Abschalten in der Art eines Schmitt-Triggers und beim Hochlaufen der Spannung am Versorgungsnetz ein steilflankiges Einschalten zu bewirken, wenn ein vorgegebener oberer Grenzwert überschritten ist. Dadurch werden undefinierte Zustände oder eine zu hohe Stromaufnahme, die bei einem sehr langsamen Spannungsanstieg vorkommen kann, vermieden.

Hierzu ist es zweckmäßig, dass der untere Grenzwert im Bereich von 1,5 bis 2,5 V und der obere Grenzwert im Bereich von 2,5 bis 4,5 V liegen. Diese Spannungen sind besonders gut für handelsübliche CMOS Logikkomponenten geeignet, aus denen in einer vorteilhaften Ausführung die Auswerteschaltung aufgebaut ist.

Insgesamt ist es zweckmäßig, als elektrischen Schalter ein bistabiles Relais zu verwenden, da dieses nur kurzzeitige Stromimpulse benötigt, um den Kontakt von dem getrennten Zustand in den verbundenen Zustand zu bewegen oder umgekehrt. Ferner ist sichergestellt, dass bei einer Unterbrechung des Versorgungsnetzes oder einem Stromausfall das Gerät eingeschaltet bleibt, wenn das Versorgungsnetz wieder Strom liefert.

Ein Ausführungsbeispiel der Erfindung ist in den Zeichnungen rein schematisch dargestellt und wird nachfolgend näher beschrieben. Es zeigt:

Fig. 1:    eine schematische Darstellung der Schaltungsanordnung und

Fig. 2:    eine detaillierte Darstellung der Schaltungsanordnung.

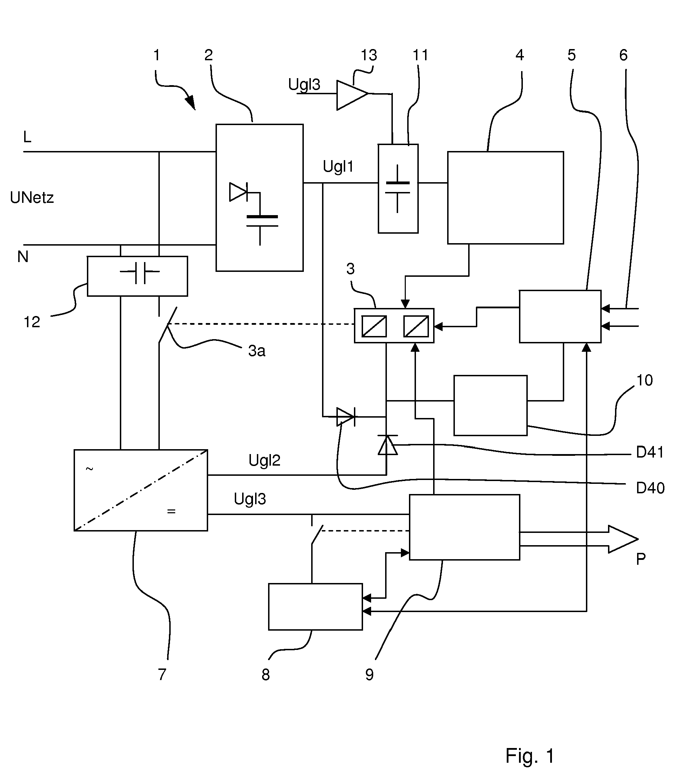

Die Fig. 1 zeigt blockweise die erfindungsgemäße Schaltungsanordnung 1, die zum Betreiben eines Haushaltgerätes bzw. zum Verbinden oder zum Trennen von elektrischen Komponenten für das Gerät vorgesehen ist. Hierbei ist insbesondere das Verbinden und Trennen des Schaltnetzteils 7 zum/vom Versorgungsnetz L, N bereitgestellt. Das Versorgungsnetz L, N wird üblicherweise über einen Anschlussstecker zum Gerät geführt. Im Gerät ist an den Versorgungsleitungen ein erster Energiespeicher 2 angeschlossen, der eine Gleichspannung Ugl1 und die benötigte elektrische Energie zum Schalten eines elektrischen Schalters 3 (K1) bereitstellen kann. An den Versorgungsleitungen L, N ist ferner ein Schaltnetzteil 7 angeschlossen, das eine Gleichspannung Ugl2 für eine Auswerteschaltung 5 einer Bedienhandhabe 6 und eine Gleichspannung Ugl3 für die Versorgung einer Steuereinrichtung 9 zum Steuern von Prozessen im Haushaltgerät bereitstellt. Zwischen Schaltnetzteil und Versorgungsnetz L, N ist ein Netzfilter 12 angeschlossen. Das Schaltnetzteil kann über den Schaltkontakt 3a vom Versorgungsnetz L, N, getrennt werden. Dem ersten Energiespeicher 2 ist ein weiterer Energiespeicher 11 nachgeschaltet, der zur Versorgung eines Steuerungsmittels 4 dient, das signaltechnisch mit dem elektrischen Schalter verbunden ist. Eine Auswerteschaltung 5 für die Bedienhandhabe 6, die Touch-Schalter oder Taster sind, ist ebenfalls signaltechnisch mit dem elektrischen Schalter 3 verbunden, so dass über den Kontakt 3a des Schalters 3 das Verbinden oder Trennen des Schaltnetzteils 7 zum/vom Versorgungsnetz L,N mittels der Bedienhandhabe 6 möglich ist. Die Bedienhandhabe 6 ist hierbei nur symbolisch als Signaleingang für die Auswerteschaltung 5 dargestellt. Die Auswerteschaltung 5 wird mittels einer Anlaufschaltung 10 versorgt, die eine vom Schaltzustand des elektrischen Schalters unabhängige Energieversorgung für die Auswerteschaltung 5 bereitstellt. Die Anlaufschaltung wird wiederum vom Kondensatornetzteil 2 oder vom Schaltnetzteil 7 mit Gleichspannung Ugl1, Ugl2 versorgt.

Die Steuerungseinrichtung 9 dient zur Durchführung des Prozesses P für das Haushaltgerät. Die Steuerungseinrichtung 9 wird mit einer Gleichspannung Ugl3, beispielsweise 5V, versorgt, die vom Schaltnetzteil 7 bereitgestellt wird. Die Steuereinrichtung 9 ist signaltechnisch zumindest mittelbar mit dem elektrischen Schalter 3 verbunden, so dass diese prozessabhängig das Schaltnetzteil 7 von zumindest einer Leitung des Versorgungsnetzes L, N trennen kann. Ein weiterer Controller 8 ist für die Steuerung einer Anzeige und der Auswertung von weiteren Touch-Tasten oder Tastern vorgesehen, der ebenfalls mit der Gleichspannung Ugl3 versorgt wird.

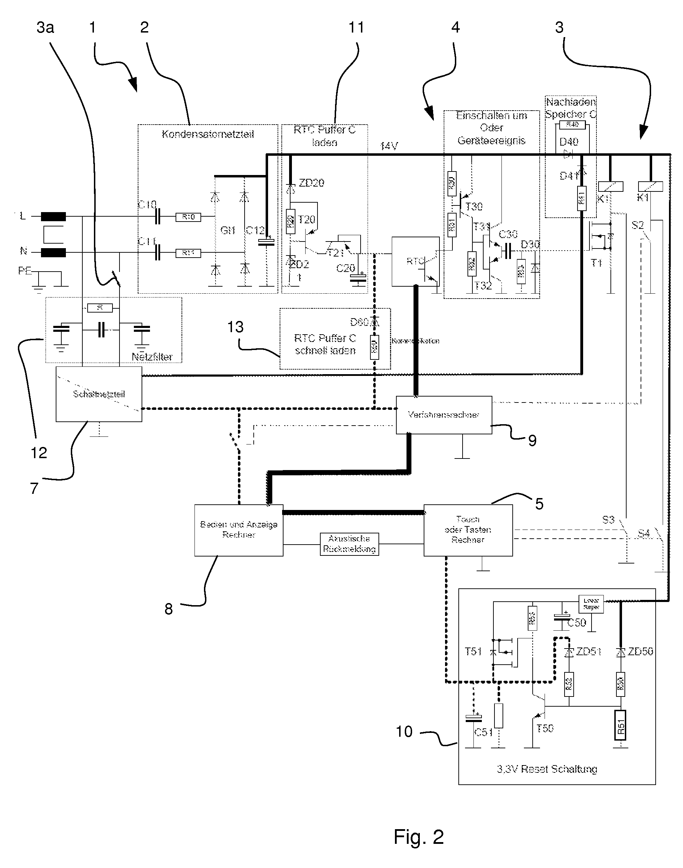

Anhand von Fig. 2 wird nun die Funktion der Schaltungsanordnung 1 erläutert.

Nach Anlegen der Netzspannung Unetz wird zunächst der Speicherkondensator C12 geladen. Je nach Netzpolarität, also auf welchem Eingang L und N liegen, wirkt entweder die Impedanz C10 und R10 oder C11 und R11 strombegrenzend. Das Kondensatornetzteil 2 liefert einen mittleren Strom (Im) von:

$$I_m := \frac{\left(U_{Netz} \cdot \sqrt{2} \cdot 2 - U_{14V}\right) \cdot C1}{T_{Netz}}$$

UNetz Effektivwert der Versorgungsspannung
U14V eingestellte Spannung des Netzteiles (entspricht Ugl1)
TNetz Periodendauer der Netzspannung
C1 Kapazität im Kondensatornetzteil.

Somit ist der mittlere zur Verfügung stehende Strom maßgeblich von dem Kondensator C10 oder C11 des Kondensatornetzteils 2 abhängig. Der Energiespeicher 2 ist hierbei Bestandteil eines Kondensatornetzteils, das eine netzgetrennte Kleinspannung bereitstellt, deren Minuspotential auf Schutzleiterpotential liegt. Bei Einsatz von Y-Kondensatoren (C10, C11) ist aufgrund der hohen Spannungsfestigkeit eine sichere Trennung gegeben.

Solange die Spannung des Kondensatornetzteils 2 kleiner der Spannung U_ZD 20 plus U_ZD21 und U_ZD50 ist, werden die Speicherkondensatoren C12 und C50 mit dem gesamten Kondensatornetzteilstrom geladen. Erst wenn die Kondensatornetzteilspannung über der Spannung der Z-Diode ZD50 und dem entsprechenden Verhältnis des Spannungsteilers R50 und R51 liegt, schaltet die Anlaufschaltung 10 mittels T50 den FET T51 durch. Ab diesem Zeitpunkt wird der Touch μC (oder Tastenrechner) (Auswerteschaltung 5) versorgt. Die in den Speicherkapazitäten C12 und C50 gespeicherte Energie reicht aus, um den Touch μC 5 vom Reset-Zustand in den Low-Power Modus zu überführen. Eine Pufferung ist notwendig, da der Touch-μC im Reset mehr Strom braucht als das Kondensatornetzteil 2 zur Verfügung stellen kann. Durch die Mitkopplung aus ZD51 und R52 wird sichergestellt, dass die durch den Anlaufstrom des Touch μC 5 abfallende Spannung am Speicherkondensator C12 nicht zum Abschalten des FET T51 führt. Der Kondensator C51 dient zur Stabilisierung der Touch μC 5 Versorgungsspannung, damit der RDSon des FET T 51 sich nicht negativ bei dem pulsförmigen Strom des Touch μC auswirkt. Die Z-Diode ZD 51 stellt sicher, dass beim Unterschreiten der spezifizierten Versorgungsspannung des Touch μC die Versorgungsspannung abgeschaltet wird. Dies ist notwendig, damit der Touch μC 5 nicht in einem Reset-Zustand hängen bleibt, falls das Gerät kurzzeitig vom Netz L, N getrennt wird und die Kondensatornetzteilspannung Ugl1 langsam absinkt. Nachdem nun der Touch μC 5 im Low- Power Modus die Ein/Aus Taste abfragt, steht der Schaltung mehr Energie zur Verfügung als sie braucht. Folglich steigt die Spannung am Speicherkondensator C 12 weiter an. Nach Erreichen der Durchbruchsspannung der Z-Diode ZD 20 und ZD 21 fließt ein Strom durch den Widerstand R20. Der Spannungsfall über dem Widerstand R20 sorgt dafür, dass der Transistor T20 leitend wird. Somit wird der Pufferkondensator C20 der RTC über den als Diode wirkenden Transistor T21 geladen. An dieser Stelle wird ein Transistor anstelle einer gewöhnlichen Diode eingesetzt, da der Leckstrom eines Transistors aufgrund der genutzten Kollektor-Basis-Strecke erheblich geringer ist. Dieser Schaltungsteil sorgt dafür, dass der nichtbenötigte Strom zur Erhaltungsladung des Pufferspeichers C20 genutzt wird. Für den Fall, dass auch dieser vollständig geladen ist, fließt der gesamte Strom durch Z-Diode ZD 21. Erst in diesem Falle wird der überschüssige Strom ausschließlich in Verlustleistung umgesetzt.

Das Einschalten des Gerätes geschieht nun wie folgt:

Nach betätigen der Ein-Taste schaltet der Touch μC 5 den elektrischen Schalter 3, der als bistabiles Relais K1 ausgebildet ist, ein. Dieses Relais K1 schaltet das Schaltnetzteil 7 und ein gegebenenfalls benötigtes Netzfilter 12 mit einem Entladewiderstand ein. Nach einigen Millisekunden liegt am Ausgang des Schaltnetzteiles 7 die gewünschte Ausgangsspannung Ugl2 an. Über die Diode D41 und den strombegrenzenden Widerstand R41 wird nun der Touch μC 5 mit ausreichend

Energie versorgt, um im aktiven Modus alle Tasten entsprechend schnell abfragen zu können. Gleichzeitig sorgt die Diode D40 dafür, dass für den Fall, dass die Netzteilspannung über der Kondensatornetzteilspannung liegt, nicht die zulässige Verlustleistung der Z-Dioden ZD 20 und ZD 21 überschritten wird. Der Parallelwiderstand zur Diode D40 sorgt für ein entsprechend schnelles Laden des Speicherkondensators C12, ohne dabei die Verlustleistung der zuvor genannten Z-Dioden ZD 20 und ZD 21 zu überschreiten. Um den Pufferspeicher C20 der RTC im aktiven Modus schnell zu laden, wird der maximal zulässige Ladestrom über die Diode D60 und den strombegrenzenden Widerstand R60 geführt. Auch in diesem Falle kann die Diode D60 mittels eines als Diode geschalteten Transistor ausgeführt sein, um die Leckströme zu reduzieren. Zusätzlich zum Schnellladen des Speicherkondensators C12 und des RTC Pufferspeichers C20 wird die Steuerungseinrichtung 9, die als verfahrenstechnischer Rechner dient, mit Spannung versorgt. Der verfahrenstechnische Rechner 9 muss die Ursache ermitteln, warum er eingeschaltet wurde, beispielsweise - Ein- Taste des Touch μC - Netzunterbrechung - Einschalten durch die RTC - Einschalten durch ein Geräte-Ereignis (Waterproof, Tür des Gerätes, ....). Je nach Vorgeschichte und Ereignis entscheidet der verfahrenstechnische Rechner 9, ob das Gerät für den Benutzer sichtbar eingeschaltet werden soll oder nicht. Soll das Gerät eingeschaltet werden, so wird der Bedien-und Anzeige Rechner 8 mit Spannung versorgt und das Haushaltgerät ist für den Kunden nutzbar.

Das Ausschalten des Gerätes geschieht wie folgt:

In vielen Haushaltgeräten, wie z.B. ein Backofen oder Kaffeevollautomat, entscheidet die Verfahrenstechnik, also der von der Steuerungseinrichtung 9 kontrollierte Prozess P, ob noch Kühl- oder Reinigungsprozesse vor dem Ausschalten des Gerätes ablaufen sollen. Somit ist es in diesem Konzept vorgesehen, dass nur der verfahrenstechnische Rechner 9 das Haushaltgerät abschalten kann. Für Geräte, die keine Vorbedingungen zum Abschalten des Gerätes haben, kann auch der Touch μC 5 für das Schaltelement S4 das bistabile Relais K1 direkt abschalten. Durch das Abschalten des bistabilen Relais K1 fällt die Spannung des Schaltnetzteiles 7 weg und sowohl der verfahrenstechnische Rechner 9 als auch der Bedien-und Anzeigerechner 8 werden abgeschaltet. Da sich nun der Touch μC 5 wieder im Low-Power Modus befindet, kommt das Gerät nun wieder mit einer Leistung kleiner 5mW aus.

Die Zeitvorwahl durch die Echtzeituhr RTC oder das Einschalten durch externen Schalter geschieht folgendermaßen:

Während des Betriebes wird die RTC über die Datenverbindung (Datenbus) mit der Steuerungseinrichtung 9 programmiert, so dass nach Ablauf der voreingestellten Zeit die RTC den Ausgang auf Low zieht. Dies hat zur Folge, dass der Transistor T30 über den Spannungsteiler R30 und R31 angesteuert wird. Die Push-Pull-Stufe steuert über den als Differenzierer wirkenden Kondensator C 30 den einzuschaltenden FET an. Durch den Widerstand R33 und den Kondensator C30 wird die Ansteuerzeit des bistabilen Relais K1 festgelegt. Eine Einschaltzeitbegrenzung ist notwendig, damit der Speicherkondensator C12 nicht zu sehr entladen wird.

## Patentansprüche

1. Schaltungsanordnung (1) zum Verbinden oder Trennen der elektrischen Komponenten eines Haushaltgerätes mit/von einem Versorgungsnetz (L, N), umfassend

   - ein Schaltnetzteil (7) zur Bereitstellung zumindest einer Versorgungsgleichspannung (Ugl2, Ugl3),
   - eine Bedienhandhabe, die bei Betätigung das Ein- oder Ausschalten durch einen Benutzer bewirken kann,
   - zumindest ein Steuerungsmittel (4), welches Ereignisse signalisieren kann, wobei das Steuerungsmittel (4) zu seiner Energieversorgung zumindest mittelbar an einem Gleichspannungsausgang (Ugl3) des Schaltnetzteils (7) angeschlossen ist,
   - einen elektrischen Schalter (3, K1) zum Koppeln des Schaltnetzteils (7) mit dem Versorgungsnetz (L, N), der durch die Bedienhandhabe und dem Steuerungsmittel (4) die Kopplung oder Trennung des Schaltnetzteils mit dem Versorgungsnetz bewirken kann, und
   - zumindest einen Energiespeicher (2, 11) zum Speichern von elektrischer Energie in Form einer elektrischen Ladung, wobei das Steuerungsmittel (4) dazu eingerichtet ist, aus der gespeicherten elektrischen Energie einen Spannungs- und/oder Stromimpuls für den elektrischen Schalter (3, K1) zu erzeugen, um die Kopplung oder Trennung des Schaltnetzteils (7) zum/vom Versorgungsnetz (L, N) zu bewirken, wobei ein erster Energiespeicher (2) zum Bereitstellen der benötigten elektrischen Energie zum Schalten des elektrischen Schalters (3, K1) vorgesehen ist und ein nachgeschalteter, weiterer Energiespeicher (11) zur Versorgung des Steuerungsmittels (4) vorgesehen ist, der dazu geeignet ist, das Steuerungsmittel (4) zu versorgen, wenn das Schaltnetzteil (7) vom Versorgungsnetz (L, N) getrennt ist,

   **gekennzeichnet durch** eine Vorrangschaltung, die dazu eingerichtet ist, den ersten Energiespeicher (2) vorrangig mit einem begrenzten maximalen Ladestrom zu laden und nach Erreichen eines vorgegebenen Ladungszustandes den weiteren Energiespeicher (11) für das Steuerungsmittel (4) mit einem begrenzten Ladestrom zu laden, wenn das Schaltnetzteil (7) vom Versorgungsnetz (L, N) getrennt ist.

2. Schaltungsanordnung (1) nach Anspruch 1, wobei der Energiespeicher (2) als Kondensatornetzteil ausgebildet ist und an den Versorgungseingängen (L, N) unabhängig vom Schaltnetzteil (7) gekoppelt ist, wobei die Kopplung mittels zumindest einer R-C-Schaltung und einem nachgeschalteten Gleichrichter (GI) erfolgt, und dass dem Gleichrichter (GI) ein Kondensator (C12) zur Speicherung von elektrischer Ladung nachgeschaltet ist.

3. Schaltungsanordnung (1) nach Anspruch 1 oder 2, umfassend eine Steuerungseinrichtung (9) zum Steuern von Prozessen (P) im Haushaltgerät, die dazu eingerichtet ist, den elektrischen Schalter (3, K1) zum Trennen des Schaltnetzteils (7) vom Versorgungsnetz (L, N) zu schalten.

4. Schaltungsanordnung (1) nach einem der Ansprüche 1 bis 3, wobei das Steuerungsmittel (4) eine programmierbare Echtzeituhr (RTC) umfasst, die dazu eingerichtet ist, den elektrischen Schalter (3, K1) zum Koppeln oder Trennen des Schaltnetzteils (7) zum/vom Versorgungsnetz zu schalten, und wobei der weitere Energiespeicher (11) zur Versorgung der Echtzeituhr (RTC) vorgesehen ist.

5. Schaltungsanordnung (1) nach einem der Ansprüche 1 bis 4, wobei das Steuerungsmittel (4) zur Auswertung und Erkennung eine Türkontaktes ausgebildet ist.

6. Schaltungsanordnung (1) nach einem der Ansprüche 1 bis 5, wobei der maximale Ladestrom und die Spannung derart eingestellt ist, dass die Leistungsaufnahme der Schaltungsanordnung etwa 5 mW beträgt.

7. Schaltungsanordnung (1) nach einem der Ansprüche 1 bis 6, wobei der erste Energiespeicher (2) und der weitere Energiespeicher (11) bei vom Versorgungsnetz getrenntem Schaltnetzteil (7) dazu ausgebildet sind, dass die Ladezeit bis Erreichen des Nennladezustandes im Bereich von 5 bis 14 Sekunden liegt, ohne den maximalen Ladestrom zu überschreiten.

8. Schaltungsanordnung (1) nach einem der Ansprüche 1 bis 7, umfassend eine Verstärkerschaltung (13), die bei eingeschaltetem Haushaltgerät, bei dem das Schaltnetzteil (7) mit dem Versorgungsnetz (L, N) verbunden ist, den weiteren Energiespeicher (11) mit einem höheren Ladestrom laden kann als bei ausgeschaltetem Haushaltgerät, wobei die Ladezeit entsprechend kürzer ist.

9. Schaltungsanordnung (1) nach einem der Ansprüche 1 bis 8, wobei der zumindest eine Energiespeicher Bestandteil eines Kondensatornetzteils ist, das eine netzgetrennte Kleinspannung bereitstellt, deren Minuspotential auf Schutzleiterpotential liegt.

## Claims

1. Circuit arrangement (1) for connecting or disconnecting the electrical components of a domestic appliance to/from a mains power supply (L, N), comprising

    - a switching-mode power supply (7) for providing at least one DC supply voltage (Ugl2, Ugl3),
    - an operating handle, which, when actuated, can cause switching-on or switching-off by a user,
    - at least one control means (4) that can signal events, the control means (4) being at least indirectly connected to a DC voltage output (Ugl3) of the switching-mode power supply (7) such that energy can be supplied to said control means,
    - an electrical switch (3, K1) for coupling the switching-mode power supply (7) to the mains (L, N), which switch can cause the switching-mode power supply to couple to or disconnect from the mains by means of the operating handle and the control means (4), and
    - at least one energy store (2, 11) for storing electrical energy in the form of an electrical charge, the control means (4) being designed to generate a voltage and/or current pulse for the electrical switch (3, K1) from the stored electrical energy in order to cause the switching-mode power supply (7) to couple to or disconnection from the mains (L, N), a first energy store (2) being provided for providing the electrical energy required for switching the electrical switch (3, K1), and a downstream, additional energy store (11) being provided for supplying energy to the control means (4), which additional energy store is able to supply energy to the control means (4) when the switching-mode power supply (7) is disconnected from the mains (L, N),

    characterised by a priority circuit, which is designed to charge the first energy store (2) with a limited, maximum charging current as a priority and, after a predetermined charging state is reached, to charge the additional energy store (11) for the control means (4) with a limited charging current when the switching-mode power supply (7) is disconnected from the supply network (L, N).

2. Circuit arrangement (1) according to claim 1, wherein the energy store (2) is formed as a capacitor power unit and is coupled to the supply inputs (L, N) independently of the switching-mode power supply (7), wherein the coupling is carried out by at least one RC circuit and a downstream rectifier (GI), and wherein a capacitor (C12) for storing electrical charge is arranged downstream of the rectifier (GI).

3. Circuit arrangement (1) according to either claim 1 or claim 2, comprising a control device (9) for controlling processes (P) in the domestic appliance, which is designed to switch the electrical switch (3, K1) in order to disconnect the switching-mode power supply (7) from the mains (L, N).

4. Circuit arrangement (1) according to any of claims 1 to 3, wherein the control means (4) comprises a programmable real-time clock (RTC) that is designed to switch the electrical switch (3, K1) in order to couple or disconnect the switching-mode power supply (7) to/from the mains, and wherein the additional energy store (11) is provided for supplying energy to the real-time clock (RTC).

5. Circuit arrangement (1) according to any of claims 1 to 4, wherein the control means (4) is designed to analyse and detect a door contact.

6. Circuit arrangement (1) according to any of claims 1 to 5, wherein the maximum charging current and the voltage are set such that the power consumption of the circuit arrangement is approximately 5 mW.

7. Circuit arrangement (1) according to any of claims 1 to 6, wherein, when the switching-mode power supply (7) is disconnected from the mains, the first energy store (2) and the additional energy store (11) are designed such that the charging time until the nominal charging state is reached is in the range of from 5 to 14 seconds, without exceeding the maximum charging current.

8. Circuit arrangement (1) according to any of claims 1 to 7, comprising an amplifier circuit (13) which, when the household appliance is switched with the switching-mode power supply (7) connected to the mains (L, N), can charge the additional energy store (11) with a higher charging current than when the domestic appliance is switched off, wherein the charging time is correspondingly shorter.

9. Circuit arrangement (1) according to any of claims 1 to 8, wherein the at least one energy store is a component of a capacitor power unit that provides a low voltage separate from the mains, the negative potential of which is at protective conductor potential.

**Revendications**

1. Agencement de circuit (1) pour le raccordement ou la séparation des composants électriques d'un appareil électroménager à/d'un réseau d'alimentation (L, N), comprenant

- une alimentation à découpage (7) pour la fourniture d'au moins une tension continue d'alimentation (Ugl2, Ugl3),
- une manette de manoeuvre qui, lors de son actionnement, peut provoquer une mise en circuit ou hors circuit par un utilisateur,
- au moins un moyen de commande (4) qui peut signaler des événements, dans lequel le moyen de commande (4) est, pour son alimentation en énergie, raccordé au moins indirectement à une sortie de tension continue (Ugl3) de l'alimentation à découpage (7),
- un commutateur électrique (3, K1) pour le couplage de l'alimentation à découpage (7) au réseau d'alimentation (L, N), qui peut, par la manette de manoeuvre et le moyen de commande (4), provoquer le couplage ou la séparation de l'alimentation à découpage au/du réseau d'alimentation, et
- au moins un accumulateur d'énergie (2, 11) pour l'accumulation d'énergie électrique sous la forme d'une charge électrique, dans lequel le moyen de commande (4) est aménagé pour produire, à partir de l'énergie électrique accumulée, une impulsion de tension et/ou de courant pour le commutateur électrique (3, K1) afin de provoquer le couplage ou la séparation de l'alimentation à découpage (7) au/du réseau d'alimentation (L, N), dans lequel un premier accumulateur d'énergie (2) est prévu pour fournir l'énergie électrique nécessaire pour la commutation du commutateur électrique (3, K1), et dans lequel il est prévu un autre accumulateur d'énergie (11), monté en aval pour l'alimentation du moyen de commande (4), qui est approprié pour alimenter le moyen de commande (4) quand l'alimentation à découpage (7) est séparée du réseau d'alimentation (L, N),

**caractérisé par** un circuit prioritaire qui est aménagé pour charger de façon prioritaire le premier accumulateur d'énergie (2) avec un courant de charge maximal limité et, une fois atteint un état de charge prédéfini, charger l'autre accumulateur d'énergie (11) pour le moyen de commande (4) avec un courant de charge limité quand l'alimentation à découpage (7) est séparée du réseau d'alimentation (L, N).

2. Agencement de circuit (1) selon la revendication 1, dans lequel l'accumulateur d'énergie (2) est constitué en tant que partie de circuit de condensateur et est couplé aux entrées d'alimentation (L, N) indépendamment de l'alimentation à découpage (7), dans lequel le couplage s'effectue au moyen d'au moins un circuit RC et d'un redresseur (GI) monté en aval, et un condensateur (C12) est monté en aval du redresseur (GI) pour l'accumulation de charge électrique.

3. Agencement de circuit (1) selon la revendication 1 ou 2, comprenant un dispositif de commande (9), pour commander des processus (P) dans l'appareil électroménager, qui est aménagé pour commuter le commutateur électrique (3, K1) en vue de procéder à la séparation entre l'alimentation à découpage (7) et le réseau d'alimentation (L, N).

4. Agencement de circuit (1) selon l'une des revendications 1 à 3, dans lequel le moyen de commande (4) comprend une horloge temps réel (RTC) programmable qui est aménagée pour commuter le commutateur électrique (3, K1) en vue de procéder au couplage ou à la séparation de l'alimentation à découpage (7) au/du réseau d'alimentation, et dans lequel l'autre accumulateur d'énergie (11) est prévu pour l'alimentation de l'horloge temps réel (RTC).

5. Agencement de circuit (1) selon l'une des revendications 1 à 4, dans lequel le moyen de commande (4) est constitué pour l'analyse et la détection d'un contact de porte.

6. Agencement de circuit (1) selon l'une des revendications 1 à 5, dans lequel le courant de charge maximal et la tension sont réglés de telle sorte que la puissance absorbée de l'agencement de circuit est d'environ 5 mW.

7. Agencement de circuit (1) selon l'une des revendications 1 à 6, dans lequel le premier accumulateur d'énergie (2) et l'autre accumulateur d'énergie (11) sont constitués pour que, lorsque l'alimentation à découpage (7) est séparée du réseau d'alimentation, le temps de charge jusqu'au moment où l'état de charge nominal est atteint soit dans la plage de 5 à 14 secondes, sans dépasser le courant de charge maximal.

8. Agencement de circuit (1) selon l'une des revendications 1 à 7, comprenant un circuit d'amplification (13) qui, lorsque l'appareil électroménager est mis en circuit, lorsque l'alimentation à découpage (7) est raccordée au réseau d'alimentation (L, N), peut charger l'autre accumulateur d'énergie (11) avec un courant de charge plus élevé que lorsque l'appareil électroménager est mis hors circuit, et le temps de charge est alors plus court en conséquence.

9. Agencement de circuit (1) selon l'une des revendications 1 à 8, dans lequel l'accumulateur d'énergie au moins au nombre de un fait partie intégrante d'une partie de réseau de condensateur qui fournit une très basse tension, séparée du réseau, dont le potentiel négatif est au potentiel du conducteur de protection.

Fig. 1

Fig. 2

**IN DER BESCHREIBUNG AUFGEFÜHRTE DOKUMENTE**

**In der Beschreibung aufgeführte Patentdokumente**

- DE 102007058379 A1
- US 20030086024 A1